# EUROPÄISCHE PATENTSCHRIFT

(11) **EP 3 161 296 B1**
(45) Veröffentlichungstag und Bekanntmachung des Hinweises auf die Patenterteilung: **09.12.2020**
(21) Anmeldenummer: 15760096.6
(22) Anmeldetag: 22.06.2015
(51) Int. Cl.: F02F 7/00, F01M 13/02, F01M 13/00

(54) **ZYLINDERKOPFHAUBE UND VERFAHREN ZUR HERSTELLUNG EINER ZYLINDERKOPFHAUBE**
CYLINDER HEAD COVER AND METHOD FOR PRODUCING A CYLINDER HEAD COVER
COUVRE-CULASSE ET PROCÉDÉ DE PRODUCTION D'UN COUVRE-CULASSE

(30) Priorität: 27.06.2014 DE 102014109075
(43) Veröffentlichungstag der Anmeldung: 03.05.2017
(73) Patentinhaber: ElringKlinger AG, 72581 Dettingen (DE)
(72) Erfinder: LAICHINGER, Peter, 89150 Laichingen (DE); RUFF, Daniel, 73274 Notzingen (DE)
(74) Vertreter: Hoeger, Stellrecht & Partner Patentanwälte mbB
(86) Internationale Anmeldenummer: PCT/EP2015/063961
(87) Internationale Veröffentlichungsnummer: WO 2015/197548

(56) Entgegenhaltungen:
- EP-A2- 1 790 836
- WO-A1-2010/017903
- DE-A1- 3 326 881
- DE-B3-102008 028 543
- JP-A- 2001 263 036
- JP-U- S6 158 609
- US-A- 4 602 595
- US-A- 4 607 604

## Beschreibung

Die vorliegende Erfindung betrifft eine Zylinderkopfhaube, welche einen Haubenkörper umfasst, der im montierten Zustand der Zylinderkopfhaube an einem Motorblock eines Verbrennungsmotors angeordnet ist und einen Zylinderkopf des Verbrennungsmotors, insbesondere einen Zylinderraum oder Ventilraum des Verbrennungsmotors, abdeckt.

An einer solchen Zylinderkopfhaube kann eine Ventilvorrichtung zur Druckbeeinflussung, insbesondere zur Druckregelung, und/oder eine Ölabscheidevorrichtung zur Abscheidung von Öl aus Blow-By-Gasen angeordnet sein. Insbesondere können eine Ventilvorrichtung und/oder eine Ölabscheidevorrichtung nach der Herstellung des Haubenkörpers der Zylinderkopfhaube beispielsweise mittels einer Klipsverbindung oder einer Rastverbindung an einer Außenseite des Haubenkörpers festgelegt werden. Die Festlegung an der Außenseite des Haubenkörpers kann bei bestimmten Betriebsbedingungen des Verbrennungsmotors zum unerwünschten Vereisen oder Zufrieren der Ventilvorrichtung führen.

Die Druckschriften DE 33 26 881 A1, US 4,607,604 A, JP 2001-263036 A, DE 10 2008 028 543 B3, EP 1 790 836 A2, US 4,602,595 A, JP S61 58609 U and WO 2010/017903 A1 offenbaren verschiedene Ausführungsformen von Zylinderkopfhauben, Druckregelventilen und Ölabscheidern.

Der vorliegenden Erfindung liegt die Aufgabe zugrunde, eine Zylinderkopfhaube bereitzustellen, welche eine integrierte Ventilvorrichtung umfasst und einfach herstellbar ist.

Diese Aufgabe wird erfindungsgemäß durch eine Zylinderkopfhaube gemäß Anspruch 1 gelöst.

Dadurch, dass bei der erfindungsgemäßen Zylinderkopfhaube ein Grundkörper der Ventilvorrichtung vorzugsweise mittels einer Schweißverbindung an der Innenseite des Haubenkörpers festgelegt ist, kann eine Zylinderkopfhaube mit einer integrierten Ventilvorrichtung einfach hergestellt werden.

Vorteilhaft kann es sein, wenn mittels des Grundkörpers und des Haubenkörpers mehrere Kammern der Ventilvorrichtung gebildet sind.

Die Ventilvorrichtung umfasst ein Abdeckelement.

Das Abdeckelement ist zum Abdecken einer oder mehrerer Kammern der Ventilvorrichtung mittels einer Schweißverbindung an dem Grundkörper der Ventilvorrichtung festgelegt.

Die Ventilvorrichtung umfasst vorzugsweise eine Ölabscheidevorrichtung oder ist vorzugsweise Bestandteil einer Ölabscheidevorrichtung.

Eine Zylinderkopfhaube mit einer integrierten Ventilvorrichtung kann insbesondere dadurch einfach hergestellt werden, dass ein Grundkörper der Ventilvorrichtung mittels einer Schweißverbindung an einer Innenseite des Haubenkörpers festgelegt ist und dass ein Abdeckelement zum Abdecken einer oder mehrerer Kammern der Ventilvorrichtung mittels einer Schweißverbindung an dem Grundkörper festgelegt ist.

Der Ventilkörper der Ventilvorrichtung ist vorzugsweise mehrteilig ausgebildet.

Insbesondere kann vorgesehen sein, dass der Ventilkörper einen Druckregelventildeckel, eine Membran, einen Stützteller und/oder ein Federelement umfasst.

Der Ventilkörper, insbesondere der Druckregelventildeckel, die Membran, der Stützteller und/oder das Federelement, sind vorzugsweise in dem Grundkörper der Ventilvorrichtung anordenbar und/oder festlegbar, bevor der Grundkörper mittels der Schweißverbindung an der Innenseite des Haubenkörpers festgelegt wird.

Die Ventilvorrichtung, insbesondere der Grundkörper der Ventilvorrichtung, ragt vorzugsweise in einen Innenraum des Haubenkörpers hinein.

Günstig kann es sein, wenn die Ventilvorrichtung, insbesondere der Grundkörper der Ventilvorrichtung, zweiseitig, dreiseitig, vierseitig oder fünfseitig von innerhalb des Haubenkörpers angeordnetem Gas, insbesondere Kurbelgehäusegas, umströmbar ist.

Vorzugsweise ist mittels der Schweißverbindung zum Festlegen des Abdeckelements an dem Grundkörper eine fluiddichte Verbindung zwischen dem Abdeckelement und dem Grundkörper gebildet.

Vorzugsweise sind mittels der Schweißverbindung zwischen dem Grundkörper und dem Abdeckelement eine oder mehrere Kammern zu einem Zylinderkopfraum oder einem Ventilraum hin fluiddicht abgedichtet.

Mittels der Schweißverbindung zwischen dem Grundkörper und dem Haubenkörper ist vorzugsweise eine fluiddichte Verbindung zwischen dem Grundkörper und dem Haubenkörper gebildet.

Vorzugsweise sind mittels der Schweißverbindung zwischen dem Haubenkörper und dem Grundkörper eine oder mehrere Kammern der Ventilvorrichtung zu einem Zylinderkopfraum oder Ventilraum hin fluiddicht abgedichtet.

Es kann vorgesehen sein, dass die Ventilvorrichtung mindestens drei Kammern umfasst, welche mittels des Abdeckelements abgedeckt und/oder abgedichtet sind.

Der Haubenkörper, der Grundkörper und/oder das Abdeckelement umfassen vorzugsweise ein Kunststoffmaterial oder sind aus einem Kunststoffmaterial gebildet.

Es kann vorgesehen sein, dass der Haubenkörper, der Grundkörper und/oder das Abdeckelement als Spritzgussbauteile ausgebildet sind.

Insbesondere kann vorgesehen sein, dass der Haubenkörper, der Grundkörper und/oder das Abdeckelement als Kunststoff-Spritzgussbauteile ausgebildet sind.

Vorzugsweise umfasst der Grundkörper der Ventilvorrichtung mindestens ein Ölabscheideelement, mindestens ein Strömungsumlenkelement, mindestens eine Ölsammelkammer, mindestens eine Filteraufnahme zur Aufnahme eines Filterelements und/oder mindestens eine Ventilaufnahme zur Aufnahme eines Ventilkörpers, insbesondere einer Druckregelventilvorrichtung und/oder einer Drainageventilvorrichtung.

Der Grundkörper ist vorzugsweise einstückig mit mindestens einem Ölabscheideelement, mindestens einem Strömungsumlenkelement, mindestens einer Ölsammelkammer, mindestens einer Filteraufnahme zur Aufnahme eines Filterelements und/oder mindestens einer Ventilaufnahme zur Aufnahme eines Ventilkörpers, insbesondere einer Druckregelventilvorrichtung und/oder einer Drainageventilvorrichtung, ausgebildet.

Erfindungsgemäß ist vorgesehen, dass mittels des Abdeckelements zwei oder mehr Kammern der Ventilvorrichtung gegenüber einer Umgebung der Ventilvorrichtung fluiddicht verschlossen sind.

Alternativ oder ergänzend hierzu kann vorgesehen sein, dass mittels des Abdeckelements zwei oder mehr Kammern der Ventilvorrichtung fluidwirksam miteinander verbunden sind.

Das Abdeckelement kann hierzu insbesondere eine Kanalstruktur, beispielsweise eine Vertiefung, umfassen. Mittels der Kanalstruktur ist vorzugsweise ein Fluid an einer Trennwand zur Trennung zweier Kammern vorbeiführbar.

Vorzugsweise umfasst die Ventilvorrichtung eine Druckregelventilvorrichtung zur Regelung eines Innendrucks eines Zylinderkopfraums relativ zu einem Außendruck in einer äußeren Umgebung der Zylinderkopfhaube.

Günstig kann es sein, wenn die Ventilvorrichtung eine an den Haubenkörper angrenzende Referenzkammer umfasst, welche mittels einer in dem Haubenkörper angeordneten Durchtrittsöffnung, insbesondere eines Referenzdrucklochs, mit einer äußeren Umgebung der Zylinderkopfhaube in Fluidverbindung steht.

Es kann vorgesehen sein, dass die Ventilvorrichtung eine Absaugkammer umfasst, welche an den Haubenkörper angrenzt.

Der Haubenkörper umfasst vorzugsweise mindestens einen Absaugstutzen.

Günstig kann es sein, wenn die Ventilvorrichtung eine Absaugkammer umfasst, welche an einen Absaugstutzen des Haubenkörpers angrenzt und/ oder sich an einen Absaugstutzen des Haubenkörpers anschließt.

Mittels des Absaugstutzens ist die Absaugkammer vorzugsweise von einer Außenseite der Zylinderkopfhaube fluidwirksam zugänglich.

Insbesondere kann durch Anlegen eines Unterdrucks an den Absaugstutzen ein Gas, beispielsweise Reingas, aus der Absaugkammer der Ventilvorrichtung abgesaugt werden.

Die vorliegende Erfindung betrifft ferner ein Verfahren zum Herstellen einer Zylinderkopfhaube.

Der vorliegenden Erfindung liegt diesbezüglich die Aufgabe zugrunde, ein Verfahren bereitzustellen, mittels welchem eine Zylinderkopfhaube, die eine integrierte Ventilvorrichtung umfasst, einfach herstellbar ist.

Diese Aufgabe wird erfindungsgemäß durch ein Verfahren zum Herstellen einer Zylinderkopfhaube gemäß Anspruch 10 gelöst.

Das erfindungsgemäße Verfahren weist vorzugsweise einzelne oder mehrere der im Zusammenhang mit der erfindungsgemäßen Zylinderkopfhaube beschriebenen Merkmale und/oder Vorteile auf.

Der Haubenkörper, der Grundkörper und/oder das Abdeckelement werden vorzugsweise in einem Kunststoff-Spritzgussverfahren hergestellt.

Insbesondere werden der Haubenkörper, der Grundkörper und/oder das Abdeckelement jeweils einstückig in einem Kunststoff-Spritzgussverfahren hergestellt.

Mindestens ein Ventilkörper, insbesondere eine Druckregelventilvorrichtung, wird vorzugsweise in eine Ventilaufnahme des Grundkörpers der Ventilvorrichtung eingebracht, insbesondere bevor der Grundkörper an dem Haubenkörper festgelegt wird.

Insbesondere kann vorgesehen sein, dass ein Druckregelventildeckel, eine Membran, ein Stützteller und/oder ein Federelement in eine Ventilaufnahme des Grundkörpers der Ventilvorrichtung eingebracht und/oder mit dem Grundkörper der Ventilvorrichtung verrastet werden.

Vorteilhaft kann es sein, wenn mindestens ein Filterelement in eine Filteraufnahme des Grundkörpers der Ventilvorrichtung eingebracht wird, insbesondere bevor der Grundkörper an dem Haubenkörper festgelegt wird.

Ferner können die erfindungsgemäße Zylinderkopfhaube und/oder das erfindungsgemäße Verfahren zur Herstellung einer Zylinderkopfhaube einzelne oder mehrere der nachfolgend beschriebenen Merkmale und/oder Vorteile aufweisen.

Vorzugsweise bilden der Haubenkörper, der Grundkörper und das Abdeckelement Wandungen mindestens einer Kammer der Ventilvorrichtung.

Mittels des Grundkörpers sind insbesondere vier Wandungen einer oder mehrerer Kammern der Ventilvorrichtung gebildet, wobei eine weitere Wandung durch den Haubenkörper und eine weitere Wandung durch das Abdeckelement gebildet sind.

Der Haubenkörper und das Abdeckelement bilden vorzugsweise einander gegenüberliegende Wandungen einer oder mehrerer Kammern der Ventilvorrichtung.

Die Ventilvorrichtung ist vorzugsweise im Wesentlichen vollständig innerhalb des Haubenkörpers angeordnet und/oder ausgebildet.

Mittels der Ventilvorrichtung, insbesondere mittels der Druckregelventilvorrichtung der Ventilvorrichtung, kann vorzugsweise ein Druck in dem Zylinderkopfraum und/oder in einem Kurbelgehäuse des Verbrennungsmotors reguliert werden.

Ein Absaugstutzen des Haubenkörpers, über welchen eine Absaugkammer der Ventilvorrichtung zugänglich ist, ist vorzugsweise mit einer Ansaugvorrichtung des Verbrennungsmotors verbunden, um Blow-By-Gase durch die Ventilvorrichtung hindurch aus dem Zylinderkopfraum anzusaugen.

Mittels der Druckregelventilvorrichtung kann vorzugsweise ein Vergleich zwischen einem Außendruck in einer Umgebung der Zylinderkopfhaube und einem Druck im Zylinderkopfraum, insbesondere in der Ventilvorrichtung, erfolgen. Mittels der Druckregelventilvorrichtung kann insbesondere eine Fluidverbindung zwischen einem Einlass der Ventilvorrichtung und der Absaugkammer zur Absaugung von Gas hergestellt werden, wenn ein Druck im Zylinderkopfraum einen vorgegebenen Druck übersteigt, insbesondere den Außendruck übersteigt.

Vorzugsweise werden mindestens zwei, insbesondere mindestens drei, Kammern der Ventilvorrichtung durch Verbinden, insbesondere Verschweißen, des Grundkörpers der Ventilvorrichtung mit dem Haubenkörper und/oder des Abdeckelements mit dem Grundkörper der Ventilvorrichtung voneinander getrennt und/oder gegeneinander abgedichtet.

Ein zusätzliches Bauteil zur Fertigstellung der Kammern, insbesondere eine Dichtung, ist vorzugsweise entbehrlich.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Explosionsdarstellung einer Zylinderkopfhaube, welche eine Ventilvorrichtung umfasst;
- Fig. 2: einen schematischen vertikalen Längsschnitt durch die Zylinderkopfhaube aus Fig. 2;
- Fig. 3: eine schematische teiltransparente Draufsicht auf eine Unterseite der Zylinderkopfhaube aus Fig. 2, mit Blickrichtung in Richtung des Pfeiles 3 in Fig. 2;
- Fig. 4: eine schematische Draufsicht auf eine Oberseite der Zylinderkopfhaube aus Fig. 2, mit Blickrichtung in Richtung des Pfeiles 4 in Fig. 2;
- Fig. 5: einen schematischen vertikalen Querschnitt durch die Zylinderkopfhaube aus Fig. 2 längs der Linie 5-5 in Fig. 4;
- Fig. 6: einen schematischen vertikalen Querschnitt durch die Zylinderkopfhaube aus Fig. 2 längs der Linie 6-6 in Fig. 4; und
- Fig. 7: eine schematische perspektivische Darstellung eines Grundkörpers und eines Abdeckelements der Ventilvorrichtung.

Gleiche oder funktional äquivalente Elemente sind in sämtlichen Figuren mit denselben Bezugszeichen versehen.

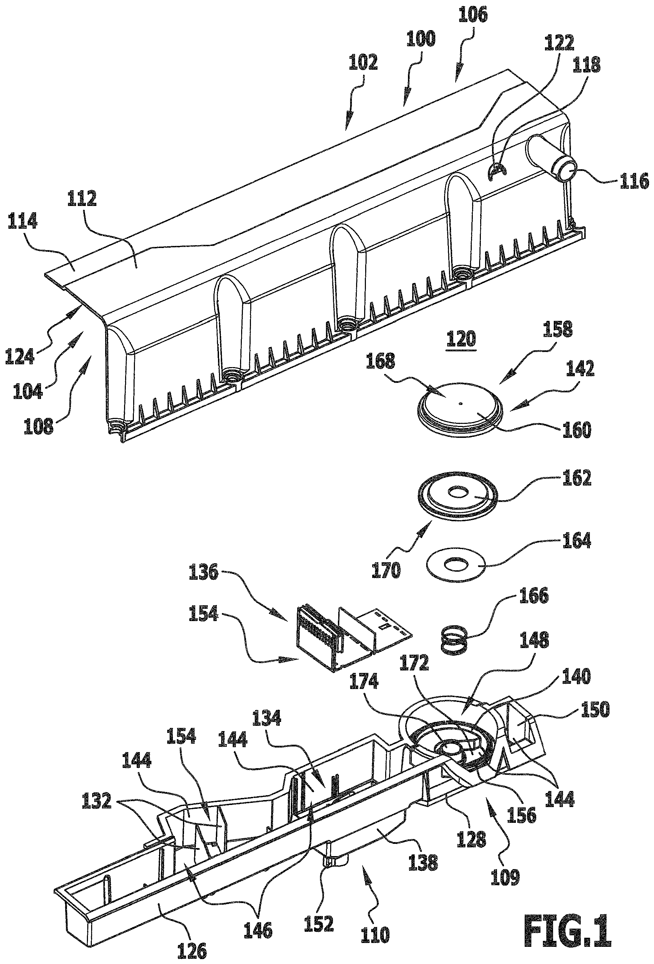

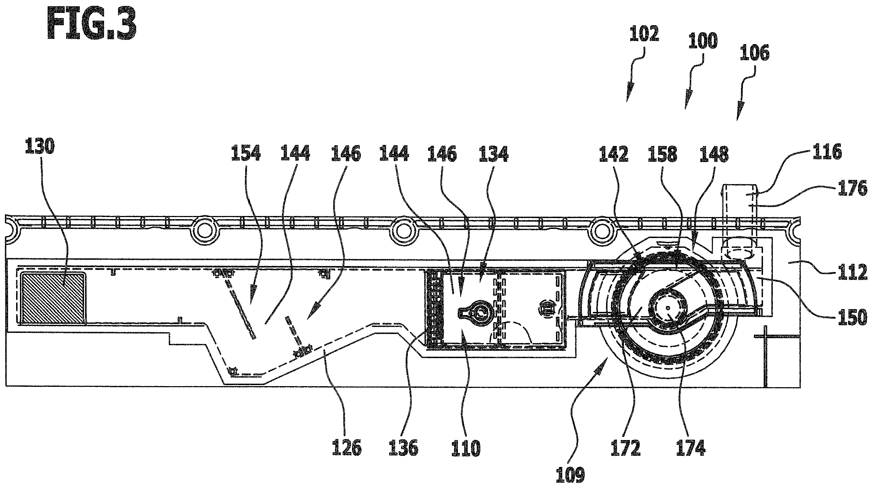

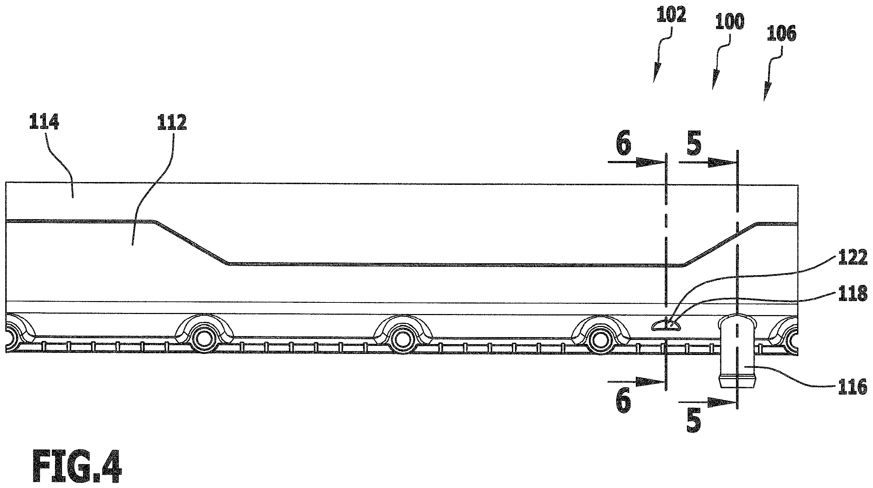

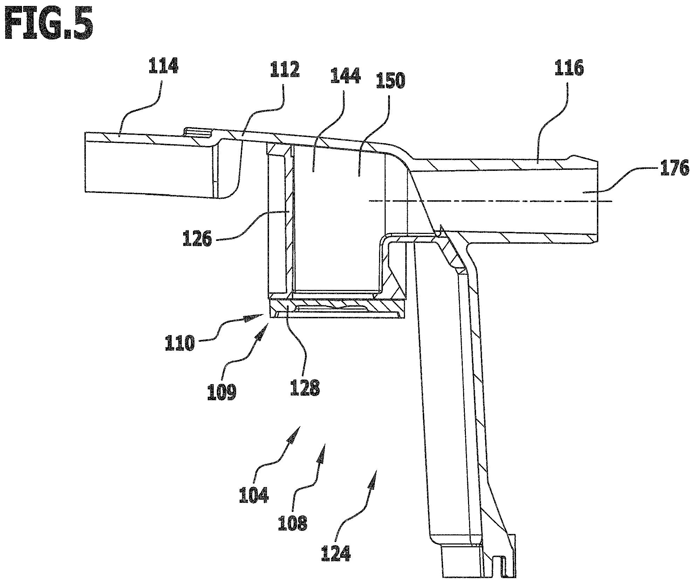

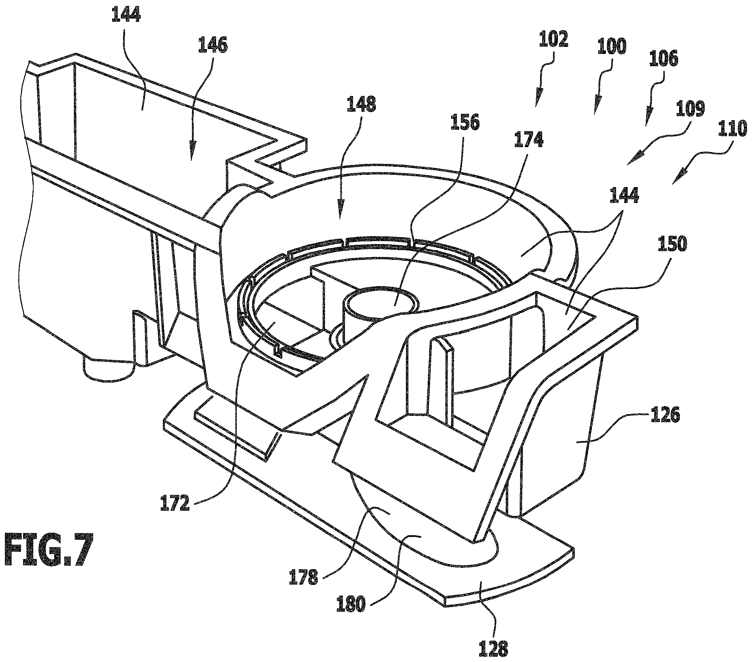

Eine in den Fig. 1 bis 7 dargestellte Ausführungsform einer als Ganzes mit 100 bezeichneten Zylinderkopfhaube dient insbesondere der Abdeckung eines (nicht dargestellten) Zylinderkopfs eines als Ganzes mit 102 bezeichneten Verbrennungsmotors.

Die Zylinderkopfhaube 100 dient insbesondere der Abdeckung eines Zylinderkopfraums 104.

Die Zylinderkopfhaube 100 kann beispielsweise als eine Ventilhaube 106 zur Abdeckung eines Ventilraums 108 des Verbrennungsmotors 102 ausgebildet sein.

In den Fig. 1 bis 7 ist stets nur ein Teil der Zylinderkopfhaube 100 dargestellt, nämlich derjenige Teil, in welchem eine Ventilvorrichtung 109 angeordnet und/oder ausgebildet ist.

Die Zylinderkopfhaube 100 als Ganzes ist vorzugsweise im Wesentlichen quaderförmig ausgebildet und umgibt den Zylinderkopfraum 104 vorzugsweise im Wesentlichen fünfseitig.

Die Ventilvorrichtung 109 kann separat vorgesehen sein.

Es kann jedoch auch vorgesehen sein, dass die Ventilvorrichtung 109 eine Ölabscheidevorrichtung 110 umfasst oder Bestandteil einer Ölabscheidevorrichtung 110 ist.

Die Ölabscheidevorrichtung 110 dient insbesondere der Abscheidung von Öl aus einem im Zylinderkopfraum 104 angeordneten Gas.

Das Gas ist insbesondere Blow-By-Gas, welches im Betrieb des Verbrennungsmotors 102 anfällt.

Die Zylinderkopfhaube 100 umfasst einen Haubenkörper 112, mittels welchem Wandungen 114, insbesondere fünf Wandungen 114, gebildet sind, die den Zylinderkopfraum 104 begrenzen.

Der Haubenkörper 112 ist insbesondere an einem (nicht dargestellten) Motorblock des Verbrennungsmotors 102 festlegbar, beispielsweise mittels Schraubverbindungen.

Der Haubenkörper 112 umfasst vorzugsweise einen Absaugstutzen 116 und eine Durchtrittsöffnung 118.

Der Absaugstutzen 116 und die Durchtrittsöffnung 118 ermöglichen insbesondere eine Fluidverbindung zwischen dem Zylinderkopfraum 104 und einer äußeren Umgebung 120 der Zylinderkopfhaube 100.

Die Durchtrittsöffnung 118 bildet insbesondere ein Referenzdruckloch 122 der Ventilvorrichtung 109.

Die Ventilvorrichtung 109 ist insbesondere an einer dem Zylinderkopfraum 104 zugewandten Innenseite 124 des Haubenkörpers 112 angeordnet und/oder ausgebildet.

Die Ventilvorrichtung 109 umfasst vorzugsweise einen Grundkörper 126 und ein Abdeckelement 128.

Der Grundkörper 126 und das Abdeckelement 128 der Ventilvorrichtung 109 sowie der Haubenkörper 112 der Zylinderkopfhaube 100 sind vorzugsweise Kunststoff-Spritzgussbauteile.

Der Grundkörper 126 umfasst einen Einlass 130, ein oder mehrere Strömungsumlenkelemente 132, eine Filteraufnahme 134 zur Aufnahme eines Filterelements 136, eine Ölsammelkammer 138 und/oder eine Ventilaufnahme 140 zur Aufnahme einer Druckregelventilvorrichtung 142.

Das eine oder die mehreren Strömungsumlenkelemente 132, die Filteraufnahme 134, die Ölsammelkammer 138 und die Ventilaufnahme 140 sind vorzugsweise einstückig mit dem Grundkörper 126 ausgebildet, insbesondere während der Herstellung des Grundkörpers 126.

Mittels des Grundkörpers 126, des Haubenkörpers 112 und des Abdeckelements 128 sind mehrere Kammern 144 der Ventilvorrichtung 109 gebildet.

Insbesondere sind eine Ölabscheidekammer 146, eine Referenzkammer 148 und eine Absaugkammer 150 gebildet.

Die Ölsammelkammer 138 schließt sich insbesondere an die Ölabscheidekammer 146 an und dient der Aufnahme von in der Ölabscheidekammer 146 abgeschiedenem Öl.

An die Ölsammelkammer 138 schließt sich ein Drainageventil 152 an, durch welches in der Ölsammelkammer 138 gesammeltes Öl aus der Ölabscheidevorrichtung 110 abführbar ist.

Die Strömungsumlenkelemente 132, die Filteraufnahme 134 und das Filterelement 136 sind vorzugsweise in der Ölabscheidekammer 146 angeordnet und dienen zur Abscheidung von Öl aus einem durch die Ölabscheidekammer 146 hindurchgeführten Gasstrom.

Die Strömungsumlenkelemente 132 und das Filterelement 136 bilden insbesondere Ölabscheideelemente 154 der Ölabscheidevorrichtung 110.

In der Referenzkammer 148 ist insbesondere die Ventilaufnahme 140 zur Aufnahme der Druckregelventilvorrichtung 142 angeordnet.

Die Ventilaufnahme 140 umfasst insbesondere eine Rastvorrichtung 156 zum Festlegen der Druckregelventilvorrichtung 142.

Die Druckregelventilvorrichtung 142 ist insbesondere ein Ventilkörper 158 zum wahlweisen Öffnen oder Verschließen einer Fluidverbindung.

Die Druckregelventilvorrichtung 142 umfasst hierzu insbesondere einen Druckregelventildeckel 160, eine Membran 162, einen Stützteller 164 und ein Federelement 166, welche in der Ventilaufnahme 140 aufnehmbar und mittels der Rastvorrichtung 156 verrastbar sind.

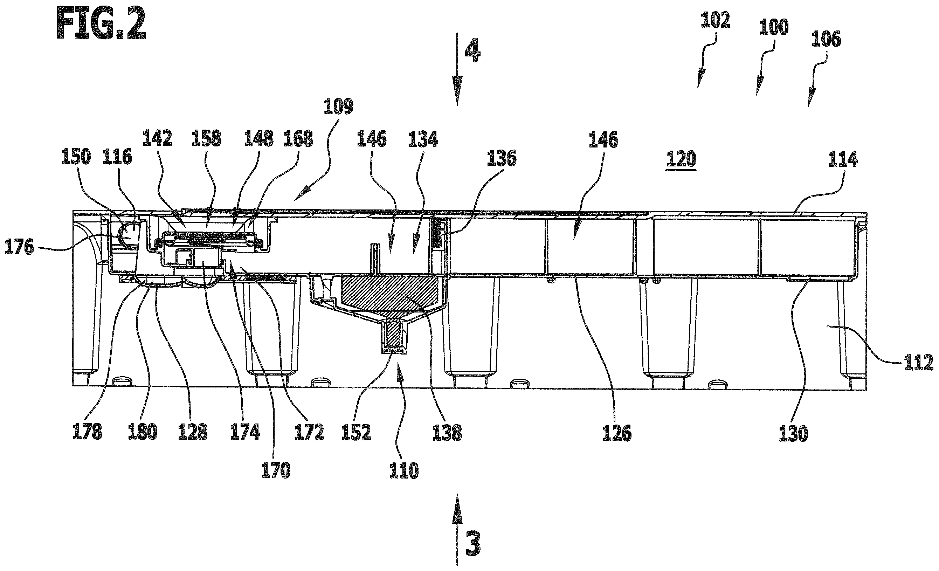

Im montierten Zustand der Zylinderkopfhaube 100 (siehe Fig. 2 bis 6) liegen an einer Oberseite 168 der Druckregelventilvorrichtung 142 und an einer Unterseite 170 der Druckregelventilvorrichtung 142 voneinander verschiedene Drücke an.

An der Oberseite 168 liegt insbesondere ein in der Umgebung 120 der Zylinderkopfhaube 100 herrschender Außendruck an. Der an die Oberseite 168 angrenzende Teil der Referenzkammer 148 ist hierzu mittels der Durchtrittsöffnung 118, insbesondere mittels des Referenzdrucklochs 122, fluidwirksam mit der Umgebung 120 der Zylinderkopfhaube 100 verbunden.

An der Unterseite 170 der Druckregelventilvorrichtung 142, insbesondere an einer Unterseite 170 einer Membran 162 der Druckregelventilvorrichtung 142, liegt insbesondere ein in der Ölabscheidekammer 146 herrschender Innendruck an. Die Unterseite 170 der Druckregelventilvorrichtung 142 ist hierzu insbesondere mittels eines Zuführkanals 172 fluidwirksam mit der Ölabscheidekammer 146 verbunden.

Ferner grenzt ein Abführkanal 174 an die Unterseite 170 der Druckregelventilvorrichtung 142, insbesondere der Membran 162, an.

Im geschlossenen Zustand der Druckregelventilvorrichtung 142 liegt die Membran 162 vorzugsweise abdichtend auf dem Abführkanal 174 auf, so dass der Zuführkanal 172 und der Abführkanal 174 fluidwirksam voneinander getrennt sind.

Der Abführkanal 174 mündet insbesondere in die Absaugkammer 150 und ist somit über den Absaugstutzen 116 mit einer (nicht dargestellten) Absaugvorrichtung verbindbar.

Der Absaugstutzen 116 bildet somit insbesondere einen Auslass 176 der Ventilvorrichtung 109, durch welchen insbesondere mittels der Ölabscheidevorrichtung 110 gereinigtes Gas (Reingas) abführbar ist.

Das Abdeckelement 128 dient einerseits der Begrenzung mindestens einer Kammer 144 der Ventilvorrichtung 109.

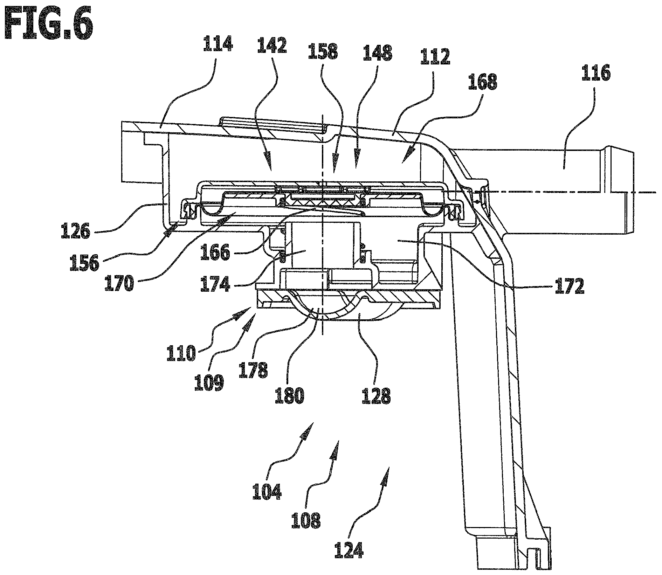

Wie insbesondere Fig. 6 zu entnehmen ist, ist andererseits aber auch eine Vertiefung 178 oder ein Kanal 180 in oder an dem Abdeckelement 128 vorgesehen.

Mittels der Vertiefung 178 oder des Kanals 180 ist insbesondere eine Fluidverbindung zwischen zwei Kammern 144 der Ventilvorrichtung 109 herstellbar.

Insbesondere ist mittels einer Vertiefung 178 oder eines Kanals 180 des Abdeckelements 128 eine Verbindung zwischen der Ölabscheidekammer 146 und der Referenzkammer 148 und/oder zwischen der Referenzkammer 148 und der Absaugkammer 150 herstellbar.

Die vorstehend beschriebene Zylinderkopfhaube 100 ist insbesondere wie folgt herstellbar:
Zunächst werden der Haubenkörper 112, der Grundkörper 126 und das Abdeckelement 128 jeweils separat in einem Spritzgussverfahren als Kunststoff-Spritzgussbauteile hergestellt.

In einem nächsten Schritt werden der Druckregelventildeckel 160, die Membran 162, der Stützteller 164 und das Federelement 166 in die Ventilaufnahme 140 des Grundkörpers 126 der Ventilvorrichtung 109 eingebracht und mittels der Rastvorrichtung 156 festgelegt.

Ferner wird das Filterelement 136, welches beispielsweise ein Vlieselement zur Abscheidung von Öl umfasst, in der Filteraufnahme 134 angeordnet.

Im Anschluss daran wird der Grundkörper 126 an der Innenseite 124 des Haubenkörpers 112 festgelegt, insbesondere durch Verschweißen des Grundkörpers 126 mit dem Haubenkörper 112.

Durch dieses Verschweißen des Grundkörpers 126 mit dem Haubenkörper 112 werden insbesondere die zunächst geöffneten Kammern 144 der Ventilvorrichtung 109 zumindest einseitig abgedeckt und fluiddicht verschlossen.

In einem weiteren Schritt oder auch vor dem Verschweißen des Grundkörpers 126 mit dem Haubenkörper 112 wird das Abdeckelement 128 an dem Grundkörper 126 angeordnet, insbesondere mittels einer Schweißverbindung.

Auch mittels des Abdeckelements 128 werden vorzugsweise eine oder mehrere Kammern 144 der Ventilvorrichtung 109 abgedeckt und/oder fluiddicht verschlossen.

Insbesondere sind mehrere Kammern 144, beispielsweise die Ölabscheidekammer 146, die Referenzkammer 148 und die Absaugkammer 150, zumindest abschnittsweise einerseits von dem Haubenkörper 112 und andererseits von dem Abdeckelement 128 begrenzt.

Der Grundkörper 126 wird insbesondere so an dem Haubenkörper 112 festgelegt, dass die Referenzkammer 148 an die Durchtrittsöffnung 118, insbesondere das Referenzdruckloch 122, angrenzt.

Ferner grenzt vorzugsweise die Absaugkammer 150 an den Absaugstutzen 116 an.

Durch das Verschweißen des Grundkörpers 126 mit dem Haubenkörper 112 einerseits und des Abdeckelements 128 mit dem Grundkörper 126 andererseits können die Kammern 144 der Ventilvorrichtung 109 zuverlässig abgedichtet werden. Insbesondere sind zusätzliche Dichtungen hierbei entbehrlich.

Die vorstehend beschriebene Zylinderkopfhaube 100 funktioniert wie folgt:
Im Betrieb des Verbrennungsmotors 102 sammeln sich im Zylinderkopfraum 104 mit Öl angereicherte Gase, insbesondere Blow-By-Gase, welche über die Druckregelventilvorrichtung 142 mittels einer (nicht dargestellten) Absaugvorrichtung abgesaugt werden.

Sobald zwischen dem Zylinderkopfraum 104 und der Absaugvorrichtung eine vorgegebene Druckdifferenz überschritten wird, kann mittels der Druckregelventilvorrichtung 142 eine Verbindung zwischen dem Zylinderkopfraum 104 und der Absaugvorrichtung getrennt werden, indem die Druckregelventilvorrichtung 142 geschlossen wird.

Dies geschieht insbesondere dadurch, dass die Membran 162 bei zu hoher Druckdifferenz abgesenkt wird und somit eine Fluidverbindung zwischen dem Abführkanal 174 und dem Zuführkanal 172 getrennt wird.

In dem Zylinderkopfraum 104 angeordnetes Gas kann dann nicht mehr durch den Einlass 130 in die Ventilvorrichtung 109 einströmen.

Bei Unterschreiten der vorgegebenen Druckdifferenz zwischen dem Zylinderkopfraum 104 und der Absaugvorrichtung wird die Ventilvorrichtung 109 mittels des Federelements 166 offen gehalten.

Einströmendes Gas strömt dann durch die Ölabscheidevorrichtung 110 der Ventilvorrichtung 109 hindurch und wird schließlich über den Absaugstutzen 116 aus der Zylinderkopfhaube 100 entfernt.

Beim Durchströmen der Ölabscheidevorrichtung 110 strömt das Gas insbesondere an den Strömungsumlenkelementen 132 vorbei und durch das Filterelement 136 hindurch.

Hierbei wird in dem Gas enthaltenes Öl abgeschieden. Das Gas wird hierdurch gereinigt.

Das abgeschiedene Öl sammelt sich in der Ölsammelkammer 138 unterhalb des Filterelements 136 und kann über das Drainageventil 152 zurück in den Zylinderkopfraum 104 außerhalb der Ventilvorrichtung 109 abgelassen werden.

Dadurch, dass die von dem Gas durchströmten Kammern 144 der Ventilvorrichtung 109 im Wesentlichen ausschließlich durch den Haubenkörper 112, den einstückigen Grundkörper 126 und das Abdeckelement 128 gebildet sind, und dadurch, dass die Kammern 144 aufgrund der Schweißverbindungen zwischen dem Haubenkörper 112 und dem Grundkörper 126 sowie zwischen dem Grundkörper 126 und dem Abdeckelement 128 zuverlässig fluiddicht ausgebildet sind, ist die Ventilvorrichtung 109 nicht nur einfach herstellbar, sondern ermöglicht auch eine zuverlässige Druckregelung in dem Zylinderkopfraum 104.

## Patentansprüche

1. Zylinderkopfhaube (100) für einen Verbrennungsmotor (102), umfassend:
- einen Haubenkörper (112), welcher im montierten Zustand der Zylinderkopfhaube (100) an einem Motorblock des Verbrennungsmotors (102) angeordnet ist und einen Zylinderkopf des Verbrennungsmotors (102) abdeckt;
- eine Ventilvorrichtung (109), welche einen Ventilkörper (158) und einen Grundkörper (126) zur Aufnahme des Ventilkörpers (158) umfasst,
wobei der Grundkörper (126) der Ventilvorrichtung (109) beispielsweise mittels einer Schweißverbindung an einer Innenseite (124) des Haubenkörpers (112) festgelegt ist,
wobei die Ventilvorrichtung (109) ein Abdeckelement (128) umfasst, welches zum Abdecken einer oder mehrerer Kammern (144) der Ventilvorrichtung (109) mittels einer Schweißverbindung an dem Grundkörper (126) der Ventilvorrichtung (109) festgelegt ist, **dadurch gekennzeichnet, dass** mittels des Abdeckelements (128) zwei oder mehr Kammern (144) der Ventilvorrichtung (109) gegenüber einer Umgebung (120, 104) der Ventilvorrichtung (109) fluiddicht verschlossen sind.

2. Zylinderkopfhaube (100) nach Anspruch 1, **dadurch gekennzeichnet, dass** der Ventilkörper (158) mehrteilig ausgebildet ist.

3. Zylinderkopfhaube (100) nach einem der Ansprüche 1 oder 2, **dadurch gekennzeichnet, dass** mittels des Grundkörpers (126) und des Haubenkörpers (112) mehrere Kammern (144) der Ventilvorrichtung (109) gebildet sind.

4. Zylinderkopfhaube (100) nach Anspruch 3, **dadurch gekennzeichnet, dass** die Ventilvorrichtung (109) mindestens drei Kammern (144) umfasst, welche mittels des Abdeckelements (128) abgedeckt und/oder abgedichtet sind.

5. Zylinderkopfhaube (100) nach einem der Ansprüche 1 bis 4, **dadurch gekennzeichnet, dass** der Haubenkörper (112), der Grundkörper (126) und/oder das Abdeckelement (128) ein Kunststoffmaterial umfassen oder aus einem Kunststoffmaterial gebildet sind und/oder als Spritzgussbauteile ausgebildet sind.

6. Zylinderkopfhaube (100) nach einem der Ansprüche 1 bis 5, **dadurch gekennzeichnet, dass** der Grundkörper (126) mindestens ein Ölabscheideelement (154), mindestens ein Strömungsumlenkelement (132), mindestens eine Ölsammelkammer (138), mindestens eine Filteraufnahme (134) zur Aufnahme eines Filterelements (136) und/oder mindestens eine Ventilaufnahme (140) zur Aufnahme eines Ventilkörpers (158) umfasst.

7. Zylinderkopfhaube (100) nach einem der Ansprüche 1 bis 6, **dadurch gekennzeichnet, dass** der Grundkörper (126) einstückig mit mindestens einem Ölabscheideelement (154), mindestens einem Strömungsumlenkelement (132), mindestens einer Ölsammelkammer (138), mindestens einer Filteraufnahme (134) zur Aufnahme eines Filterelements (136) und/oder mindestens einer Ventilaufnahme (140) zur Aufnahme eines Ventilkörpers (158) ausgebildet ist.

8. Zylinderkopfhaube (100) nach einem der Ansprüche 1 bis 7, **dadurch gekennzeichnet, dass** mittels des Abdeckelements (128) zwei oder mehr Kammern (144) der Ventilvorrichtung (109) fluidwirksam miteinander verbunden sind.

9. Zylinderkopfhaube (100) nach einem der Ansprüche 1 bis 8, **dadurch gekennzeichnet, dass** die Ventilvorrichtung (109)
a) eine Druckregelventilvorrichtung (142) zur Regelung eines Innendrucks in einem Zylinderkopfraum (104) relativ zu einem Außendruck in einer äußeren Umgebung (120) der Zylinderkopfhaube (100) umfasst; und/oder
b) eine an den Haubenkörper (112) angrenzende Referenzkammer (148) umfasst, welche mittels einer in dem Haubenkörper (112) angeordneten Durchtrittsöffnung (118) mit einer äußeren Umgebung (120) der Zylinderkopfhaube (100) in Fluidverbindung steht; und/oder
c) eine Absaugkammer (150) umfasst, welche sich an einen Absaugstutzen (116) des Haubenkörpers (112) anschließt.

10. Verfahren zum Herstellen einer Zylinderkopfhaube (100), umfassend:
- Bereitstellen eines Haubenkörpers (112), welcher im montierten Zustand der Zylinderkopfhaube (100) an einem Motorblock des Verbrennungsmotors (102) angeordnet ist und einen Zylinderkopf des Verbrennungsmotors (102) abdeckt;
- Bereitstellen eines Grundkörpers (126) einer Ventilvorrichtung (109);
- Festlegen des Grundkörpers (126) der Ventilvorrichtung (109) an einer Innenseite (124) des Haubenkörpers (112) beispielsweise mittels einer Schweißverbindung;
- Abdecken einer oder mehrerer Kammern (144) der Ventilvorrichtung (109) mittels eines Abdeckelements (128) der Ventilvorrichtung (109) dadurch, dass das Abdeckelement (128) an dem Grundkörper (126) der Ventilvorrichtung (109) mittels einer Schweißverbindung festgelegt wird, **dadurch gekennzeichnet, dass** zwei oder mehr Kammern (144) der Ventilvorrichtung (109) mittels des Abdeckelements (128) gegenüber einer Umgebung (120, 104) der Ventilvorrichtung (109) fluiddicht verschlossen werden.

11. Verfahren nach Anspruch 10, **dadurch gekennzeichnet, dass** der Haubenkörper (112), der Grundkörper (126) und/oder das Abdeckelement (128) in einem Kunststoff-Spritzgussverfahren hergestellt werden.

12. Verfahren nach einem der Ansprüche 10 oder 11, **dadurch gekennzeichnet, dass** mindestens ein Ventilkörper (158), insbesondere eine Druckregelventilvorrichtung (142), in eine Ventilaufnahme (140) des Grundkörpers (126) der Ventilvorrichtung (109) eingebracht wird, bevor der Grundkörper (126) an dem Haubenkörper (112) festgelegt wird.

13. Verfahren nach einem der Ansprüche 10 bis 12, **dadurch gekennzeichnet, dass** mindestens ein Filterelement (136) in eine Filteraufnahme (134) des Grundkörpers (126) der Ventilvorrichtung (109) eingebracht wird, bevor der Grundkörper (126) an dem Haubenkörper (112) festgelegt wird.

## Claims

1. Cylinder head cover (100) for an internal combustion engine (102), comprising:
- a cover body (112) which in the installed state of the cylinder head cover (100) is arranged on an engine block of the internal combustion engine (102) and covers a cylinder head of the internal combustion engine (102);
- a valve device (109) which comprises a valve body (158) and a base body (126) for receiving the valve body (158),
wherein the base body (126) of the valve device (109) is fixed to an inner side (124) of the cover body (112), for example by means of a welded joint,
wherein the valve device (109) comprises a covering element (128) which, in order to cover one or more chambers (144) of the valve device (109), is fixed to the base body (126) of the valve device (109) by means of a welded joint,
**characterized in that** two or more chambers (144) of the valve device (109) are closed off in a fluid-tight manner with respect to an environment (120, 104) surrounding the valve device (109) by means of the covering element (128).

2. Cylinder head cover (100) in accordance with Claim 1, **characterized in that** the valve body (158) is of multi-part configuration.

3. Cylinder head cover (100) in accordance with either of Claims 1 or 2, **characterized in that** a plurality of chambers (144) of the valve device (109) are formed by means of the base body (126) and the cover body (112).

4. Cylinder head cover (100) in accordance with Claim 3, **characterized in that** the valve device (109) comprises at least three chambers (144), which are covered and/or sealed by means of the covering element (128).

5. Cylinder head cover (100) in accordance with any one of Claims 1 to 4, **characterized in that** the cover body (112), the base body (126) and/or the covering element (128) comprise a plastics material or are formed from a plastics material or are formed as injection-molded components.

6. Cylinder head cover (100) in accordance with any one of Claims 1 to 5, **characterized in that** the base body (126) comprises at least one oil-separation element (154), at least one flow-diversion element (132), at least one oil-collection chamber (138), at least one filter receptacle (134) for receiving a filter element (136) and/or at least one valve receptacle (140) for receiving a valve body (158).

7. Cylinder head cover (100) in accordance with any one of Claims 1 to 6, **characterized in that** the base body (126) is formed as one piece with at least one oil-separation element (154), at least one flow-diversion element (132), at least one oil-collection chamber (138), at least one filter receptacle (134) for receiving a filter element (136) and/or at least one valve receptacle (140) for receiving a valve body (158).

8. Cylinder head cover (100) in accordance with any one of Claims 1 to 7, **characterized in that** two or more chambers (144) of the valve device (109) are fluid-connected to one another by means of the covering element (128).

9. Cylinder head cover (100) in accordance with any one of Claims 1 to 8, **characterized in that** the valve device (109) comprises
a) a pressure-regulating valve device (142) for regulating an internal pressure in a cylinder head space (104) relative to an external pressure in an external environment (120) surrounding the cylinder head cover (100); and/or
b) a reference chamber (148) which adjoins the cover body (112) and is in fluid communication with an external environment (120) surrounding the cylinder head cover (100) by means of a through-opening (118) disposed in the cover body (112); and/or
c) a suction chamber (150) which is connected to a suction connection piece (116) of the cover body (112).

10. Method for producing a cylinder head cover (100), comprising:
- providing a cover body (112) which in the installed state of the cylinder head cover (100) is arranged on an engine block of the internal combustion engine (102) and covers a cylinder head of the internal combustion engine (102);
- providing a base body (126) of a valve device (109);
- fixing the base body (126) of the valve device (109) to an inner side (124) of the cover body (112), for example by means of a welded joint;
- covering one or more chambers (144) of the valve device (109) by means of a covering element (128) of the valve device (109) by way of the covering element (128) being fixed to the base body (126) of the valve device (109) by means of a welded joint,
**characterized in that** two or more chambers (144) of the valve device (109) are closed off in a fluid-tight manner with respect to an environment (120, 104) surrounding the valve device (109) by means of the covering element (128).

11. Method in accordance with Claim 10, **characterized in that** the cover body (112), the base body (126) and/or the covering element (128) are produced by a plastics injection-molding process.

12. Method in accordance with either of Claims 10 or 11, **characterized in that** at least one valve body (158), in particular a pressure-regulating valve device (142), is introduced into a valve receptacle (140) of the base body (126) of the valve device (109) before the base body (126) is fixed to the cover body (112).

13. Method in accordance with any one of Claims 10 to 12, **characterized in that** at least one filter element (136) is introduced into a filter receptacle (134) of the base body (126) of the valve device (109) before the base body (126) is fixed to the cover body (112).

## Revendications

1. Couvre-culasse (100) pour un moteur à combustion interne (102), comprenant
- un corps de couverture (112), lequel est disposé, dans l'état monté du couvre-culasse (100), au niveau d'un bloc-moteur du moteur à combustion interne (102) et recouvre une culasse du moteur à combustion interne (102) ;
- un dispositif de soupape (109), lequel comprend un corps de soupape (158) et un corps de base (126) pour loger le corps de soupape (158),
dans lequel le corps de base (126) du dispositif de soupape (109) est fixé par exemple au moyen d'une liaison par soudage à un côté intérieur (124) du corps de couverture (112),
dans lequel le dispositif de soupape (109) comprend un élément de recouvrement (128), lequel est fixé au corps de base (126) du dispositif de soupape (109) au moyen d'une liaison par soudage pour recouvrir une ou plusieurs chambres (144) du dispositif de soupape (109),
**caractérisé en ce que**
deux chambres (144) ou plus du dispositif de soupape (109) sont fermées de manière étanche aux fluides par rapport à un environnement (120, 104) du dispositif de soupape (109) au moyen de l'élément de recouvrement (128).

2. Couvre-culasse (100) selon la revendication 1, **caractérisé en ce que** le corps de soupape (158) est réalisé en plusieurs parties.

3. Couvre-culasse (100) selon l'une quelconque des revendications 1 ou 2, **caractérisé en ce que** plusieurs chambres (144) du dispositif de soupape (109) sont formées au moyen du corps de base (126) et du corps de couverture (112).

4. Couvre-culasse (100) selon la revendication 3, **caractérisé en ce que** le dispositif de soupape (109) comprend au moins trois chambres (144), lesquelles sont recouvertes et/ou étanchéifiées au moyen de l'élément de recouvrement (128).

5. Couvre-culasse (100) selon l'une quelconque des revendications 1 à 4, **caractérisé en ce que** le corps de couverture (112), le corps de base (126) et/ou l'élément de recouvrement (128) comprennent un matériau plastique ou sont formés à partir d'un matériau plastique et/ou sont réalisés en tant que composants moulés par injection.

6. Couvre-culasse (100) selon l'une quelconque des revendications 1 à 5, **caractérisé en ce que** le corps de base (126) comprend au moins un élément séparateur d'huile (154), au moins un élément de déviation d'écoulement (132), au moins une chambre de collecte d'huile (138), au moins un logement de filtre (134) pour loger un élément filtrant (136) et/ou au moins un logement de soupape (140) pour loger un corps de soupape (158).

7. Couvre-culasse (100) selon l'une quelconque des revendications 1 à 6, **caractérisé en ce que** le corps de base (126) est réalisé d'un seul tenant avec au moins un élément séparateur d'huile (154), au moins un élément de déviation d'écoulement (132), au moins une chambre de collecte d'huile (138), au moins un logement de filtre (134) pour loger un élément de filtre (136) et/ou au moins un logement de soupape (140) pour loger un corps de soupape (158).

8. Couvre-culasse (100) selon l'une quelconque des revendications 1 à 7, **caractérisé en ce que** deux chambres (144) ou plus du dispositif de soupape (109) sont en communication fluidique active l'une avec l'autre au moyen de l'élément de recouvrement (128).

9. Couvre-culasse (100) selon l'une quelconque des revendications 1 à 8, **caractérisé en ce que** le dispositif de soupape (109)
a) comprend un dispositif de soupape de régulation de pression (142) pour réguler une pression intérieure dans un espace pour culasse (104) par rapport à une pression extérieure dans un environnement (120) extérieur du couvre-culasse (100) ; et/ou
b) comprend une chambre de référence (148) jouxtant le corps de couverture (112), laquelle est en communication fluidique avec un environnement (120) extérieur du couvre-culasse (100) au moyen d'une ouverture de passage (118) disposée dans le corps de couverture (112) ; et/ou
c) comprend une chambre d'évacuation par aspiration (150), laquelle est raccordée à une tubulure d'évacuation par aspiration (116) du corps de couverture (112).

10. Procédé pour fabriquer un couvre-culasse (100), comprenant :
- la fourniture d'un corps de couverture (112), lequel est disposé, dans l'état monté du couvre-culasse (100), au niveau d'un bloc-moteur du moteur à combustion interne (102) et recouvre une culasse du moteur à combustion interne (102) ;
- la fourniture d'un corps de base (126) d'un dispositif de soupape (109) ;
- la fixation du corps de base (126) du dispositif de soupape (109) à un côté intérieur (124) du corps de couverture (112) par exemple au moyen d'une liaison par soudage ;
- le recouvrement d'une ou de plusieurs chambres (144) du dispositif de soupape (109) au moyen d'un élément de recouvrement (128) du dispositif de soupape (109) en ce que l'élément de recouvrement (128) est fixé au corps de base (126) du dispositif de soupape (109) au moyen d'une liaison par soudage, **caractérisé en ce que**
deux chambres (144) ou plus du dispositif de soupape (109) sont fermées de manière étanche aux fluides par rapport à un environnement (120, 104) du dispositif de soupape (109) au moyen de l'élément de recouvrement (128).

11. Procédé selon la revendication 10, **caractérisé en ce que** le corps de couverture (112), le corps de base (126) et/ou l'élément de recouvrement (128) sont fabriqués dans un procédé de moulage par injection de matière plastique.

12. Procédé selon l'une quelconque des revendications 10 ou 11, **caractérisé en ce qu'**au moins un corps de soupape (158), en particulier un dispositif de soupape de régulation de pression (142), est introduit dans un logement de soupape (140) du corps de base (126) du dispositif de soupape (109) avant que le corps de base (126) soit fixé au corps de couverture (112).

13. Procédé selon l'une quelconque des revendications 10 à 12, **caractérisé en ce qu'**au moins un élément filtrant (136) est introduit dans un logement de filtre (134) du corps de base (126) du dispositif de soupape (109) avant que le corps de base (126) soit fixé au corps de couverture (112).
